# EUROPEAN PATENT SPECIFICATION

(11) **EP 3 279 471 B1**
(45) Date of publication and mention of the grant of the patent: **30.09.2020**
(21) Application number: 16182605.2
(22) Date of filing: 03.08.2016
(51) Int. Cl.: F03D 80/70, F16C 17/20, F16C 33/26, F16C 17/02, F16C 35/02

(54) **WIND TURBINE, BEARING HOUSING AND METHOD FOR OPERATING A WIND TURBINE**
WINDTURBINE, LAGERGEHÄUSE UND VERFAHREN ZUM BETREIBEN EINER WINDTURBINE
ÉOLIENNE, BOÎTIER DE PALIER ET PROCÉDÉ POUR LE FONCTIONNEMENT D'UNE ÉOLIENNE

(43) Date of publication of application: 07.02.2018
(73) Proprietor: Siemens Gamesa Renewable Energy A/S, 7330 Brande (DK)
(72) Inventor: Eriksen, Uffe, 8700 Horsens (DK); Lemma, Edom, 7100 Jerlev, Vejle (DK); Thomsen, Kim, 7430 Ikast (DK)
(74) Representative: Aspacher, Karl-Georg

(56) References cited:
- EP-A1- 2 754 893
- EP-A1- 2 921 728
- EP-A1- 2 927 524
- CN-A- 105 508 155

## Description

The invention relates to a wind turbine, comprising a rotor with a rotor shaft connected to a generator and a bearing housing.

In conventional wind turbines, as known from prior art, the rotor shaft is rotatably arranged by at least two bearings received in the bearing housing. As the size of wind turbines keeps growing to above 10 MW it is a problem to keep down the maintenance and service costs during the lifetime. Especially the main bearing of such large wind turbines is a very expensive part to maintain and exchange, in particular on offshore wind turbines normally the whole bearing housing structure has to be exchanged.

EP 2921728 A1 describes a hybrid shaft bearing. The hybrid shaft bearing comprises a hydrodynamic journal bearing and a rolling bearing. Both bearings cooperate with a support structure and rotatably support a shaft. To avoid contact between the sliding surfaces of the hydrodynamic bearing the auxiliary rolling bearing carries the load at low speed. The hydrodynamic bearing takes over the bearing load when a certain speed of rotation is reached. Another prior art example is disclosed in EP 2754893 A1.

In particular in offshore constructions a service or maintenance fleet has to be mobilized to repair or maintain the wind turbine. Furthermore it is challenging to remove or exchange a main bearing as they are usually built in one piece, so that dismantling of the construction is required.

Besides that the wind turbine is out of operation until the maintenance fleet or service fleet is mobilized and the defective bearing is maintained or repaired, which leads to a high downtime of the wind turbine.

Therefore, it is an object of the invention to provide a wind turbine which is easier to repair or maintain, whereby the downtime is reduced.

This is inventively achieved by a wind turbine as initially described, whereby the bearing housing comprises at least a first bearing group and a second bearing group each comprising at least a primary bearing setup and a secondary bearing setup in which bearing means are receivable, whereby the rotor shaft is rotatably arranged by the primary bearing setups or the secondary bearing setups.

The invention is based on the consideration to have a primary bearing setup and a secondary bearing setup in each bearing group. Advantageously the rotor shaft is therefore either rotatably arranged by the primary bearing setup or the secondary bearing setup of each bearing group. If the primary bearing setup is used to pivot the rotor shaft and a failure or damage occurs to the primary bearing setup or one of the primary bearing setups, the wind turbine can be stopped and the secondary bearing setups can be used to pivot the rotor shaft. Therefore there is no need to wait until the maintenance or service fleet is mobilized and the primary bearing setup is exchanged or repaired, as the secondary bearing setup can be used to pivot the rotor shaft or arrange the rotor shaft rotatably, respectively, and the wind turbine is made operational at least for the time the maintenance or service fleet needs to maintain or repair the primary bearing setups. As a matter of fact the downtime of the wind turbine in case of failure or damage can be reduced since there are secondary bearing setups provided that can take over the function of the primary bearing setups. Advantageously it is less extensive to use the secondary bearing setups than to have the whole bearing housing exchanged. To change the bearing setups it is for example merely necessary to change the bearing means from the primary bearing setup, that is damaged or needs maintenance to the corresponding secondary bearing setup. Therefore the time and effort to change the bearing means between the bearing setups is much less than to have the bearing setup or even the whole bearing housing exchanged.

It is also possible, if the primary bearing setups are irreparably damaged, for example in the case of a raceway damage in the rotor shaft, to use the secondary bearing setups as a "second life" for the bearing of the wind turbine, as the bearing means can be used in the secondary bearing setups and therefore the bearing of the wind turbine does not have to be exchanged which is, as described before, a time and cost intensive undertaking.

Preferably, the first bearing group and the second bearing group are arranged in axially spaced locations. Therefore the rotor shaft is rotatably arranged or pivoted at two different locations that are axially spaced. Of course the rotor shaft is rotatably arranged by either the primary bearing setups or the secondary bearing setups of the first bearing group and the second bearing group. Besides that, it is also possible to have only the primary bearing setup of the first bearing group changed to the secondary bearing setup if only the primary bearing setup of the first bearing group is damaged or needs maintenance. Thus the primary bearing setup of the second bearing group can be kept in operation as there is no damage or need for maintenance or repair of the primary bearing setup of the second bearing group.

According to a further embodiment of the invention, the primary bearing setup and the secondary bearing setup of the first bearing group and/or the primary bearing setup and the secondary bearing setup of the second bearing group are axially abutting each other. According to this embodiment the primary bearing setup and the secondary bearing setup that are assigned to the first or second bearing group are located axially in close contact to each other. Advantageously the rotor shaft is therefore rotatably arranged equally, independent of the pivoting or the rotatable arrangement, respectively, in the primary bearing setups or the secondary bearing setups, as they have axially similar locations.

According to another embodiment of the invention, the bearing setups comprise at least one circumferentially arranged notch in which at least one bearing means is receivable or received. According to this embodiment the at least one bearing means is receivable in each notch that is provided in the bearing housing and is part of the primary bearing setup and the secondary bearing setup. More preferably the notch is accessible without the need for dismantling and can therefore be accessed easier. Therefore in case of failure or damage the bearing means in the notch can be accessed and moved to the secondary bearing setups or more generally the other bearing setups so that the wind turbine can be made operational again before the failed or damaged bearing setup is maintained or repaired.

Advantageously, the at least one notch is fluid proof. According to this development of the invention the notch or the notches in the first bearing setups or the secondary bearing setups can be made fluid proof so that a fluid bearing means can be received or a bearing fluid in general can be received in the notch or the notches.

Preferably the bearing means are fluid bearings and/or bearing elements, in particular sliding bearings, wherein each bearing element comprises at least one exchangeable bearing pad. By providing fluid bearings or bearing elements with exchangeable bearing pads it is possible, that a bearing setup in failure can be removed or it is further possible that the bearing elements that are assigned to the bearing setup can be removed with ease. The removed bearing elements, in case there is no damage to the bearing elements, can be used in the other bearing setup to keep the wind turbine operational.

Aside, the invention relates to a bearing housing for an inventive wind turbine as described above. Of course, all details, features and advantages that are described with respect to the wind turbine are transferable to the bearing housing. The invention further relates to a method for operating an inventive wind turbine, whereby the wind turbine is operated with the bearing means being mounted or received in the primary bearing setups or the secondary bearing setups, whereby the bearing setups in operation are changed, if at least one bearing setup related component is damaged or needs maintenance.

The inventive method is based on the consideration, that the inventive wind turbine provides an extra bearing setup or extra bearing setups, respectively. Those secondary bearing setups can be used, if there is a bearing related damage or need for maintenance in the primary bearing setup. In this case the affected bearing setup can be set out of operation, as the bearing means can be removed. In return the other bearing setup assigned to the same bearing group as the affected bearing setup can be set in operation, as a bearing means can be inserted.

By way of changing the bearing setup in operation the wind turbine can be made operational again with less effort than it takes to maintain or repair the affected bearing setup, which makes it possible to reduce the downtime of the wind turbine and the costs for repairing or maintaining the broken bearing setup.

The inventive method further preferably comprises the following steps:
If at least one primary bearing setup is damaged or needs maintenance the secondary bearing setups are used to pivot or rotatably arrange the rotor shaft until the at least one primary bearing setup is repaired or maintained, and if the at least one primary bearing setup is irreparably broken the secondary bearing setups are kept in operation.

Thus it is possible to give the wind turbine a "second life" since the inventive wind turbine can be kept in operation as merely the affected bearing setup can be set out of operation and the other bearing setup, that is assigned to the same bearing group, can be made operational by inserting the proper bearing means. It is therefore not necessary to repair or maintain the affected bearing immediately as in conventional wind turbines. The other bearing setup can be used until the former bearing setup is repaired or maintained. Of course it is also possible to still use the other bearing setup, although the former bearing setup is repaired or maintained, until a defect or failure affects the other bearing setup. It is also possible to re-change the bearing means from the other bearing setup to the former bearing setup as soon as the repair or maintenance procedure on the former bearing setup is finished.

In case of an irreparable damage to the former bearing setup it is, of course, also possible to keep the other bearing setup in operation until there is a defect or failure in the other bearing setup. In contrast to conventional wind turbines the inventive wind turbine is operational, until one of the bearing setups is irreparably broken and the other bearing setup needs maintenance or needs to be repaired. Therefore especially in large wind turbines for offshore constructions the downtime can be reduced and the costs for mobilizing the maintenance fleet can also be reduced, as the maintenance fleet does not have to be mobilized for each failure or need for maintenance of a single bearing.

According to a further embodiment of the inventive method the bearing means of the primary bearing setups are used in the secondary bearing setups, if the primary bearing setups are not operational. Of course it is also possible to use the bearing means of the secondary bearing setups in the primary bearing setups, if the secondary bearing setup is not operational.

Of course each advantage, detail or feature, described with respect to the inventive method is transferable to the inventive wind turbine and the inventive bearing housing.

In the following, the invention is disclosed in detail with reference to the principal drawings, which show:
- Fig. 1: a perspective view of an inventive bearing housing;
- Fig. 2: a sectional drawing of the bearing housing from figure 1; and
- Fig. 3: a sectional drawing of an inventive wind turbine.

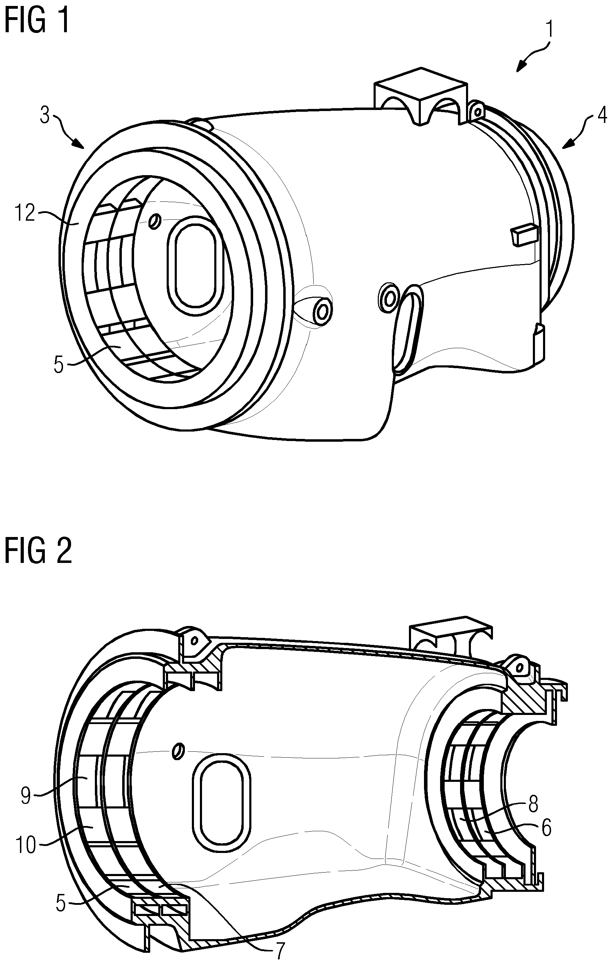

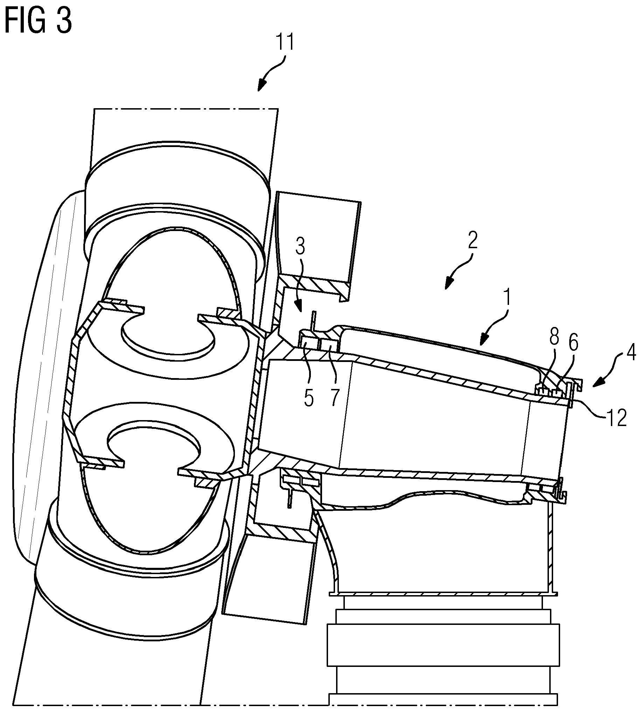

Figure 1 shows a perspective view of a bearing housing 1 for a wind turbine 2, which is depicted in figure 3. The bearing housing 1 comprises a first bearing group 3 and a second bearing group 4, being axially spaced. The first bearing group 3 and the second bearing group 4 each comprise a primary bearing setup 5, 6 and secondary bearing setup 7, 8.

As can best be seen in figure 2, the primary bearing setup 5 and the secondary bearing setup 7 as well as the primary bearing setup 6 and the secondary bearing setup 8 abut each other axially. Therefore the pivot points for the rotor shaft (not shown) are similar independent of the use of the primary bearing setups 5, 7 or the secondary bearing setups 6, 8.

The bearing setups 5, 6, 7, 8 comprise notches 9 that are circumferentially arranged and able to receive bearing means, for example a fluid bearing. In case of sliding bearings exchangeable pads 10 can be received in the notches 9 and can be exchanged in case of pad damage. The notch 9 is, in particular in case of a bearing fluid filled in the notch, built fluid proof.

Advantageously the bearing housing 1 has a primary bearing setup 5, 7 and a secondary bearing setup 6, 8 in the first bearing group 3 and the second bearing group 4, whereby either the primary bearing setups 5, 7 or the secondary bearing setups 6, 8 contain bearing means. Therefore in case one of the bearing setups 5 - 8 is damaged or needs maintenance, the bearing setups 5 - 8 can be switched or changed, respectively. For example, if the primary bearing setup 5, 7 are in operation, so that the bearing means are received in the notches 9 of the primary bearing setups 5, 7 and a damage or a need for maintenance occurs at one of the primary bearing setups 5, 7 the respective affected bearing setup 5, 7 can be set out of operation and the corresponding secondary bearing setup 6, 8 can be set in operation. Thus, the wind turbine 2 can be kept operational, even if one of the primary bearing setups 5, 7 is not operational. Of course it is also possible to change both primary bearing setups 5, 7 if only one of the primary bearing setups 5, 7 is affected.

After the affected primary bearing setup 5, 7 is repaired or maintained the primary bearing setups 5, 7 or the respective primary bearing setup 5, 7 can be used again, whereby the respective secondary bearing setup 6, 8 can be set out of operation and the bearing means can be switched from the respective secondary bearing setup 6, 8 into the primary bearing setup 5, 7. It is also possible to keep the secondary bearing setup 6, 8 in operation, even if the primary bearing setup 5, 7, that has previously been affected by the failure or damage is repaired or maintained.

In particular, if one of the primary bearing setups 5, 7 is irreparably damaged, for example if the raceway on the rotor shaft is irreparably damaged, the corresponding secondary bearing setup 6, 8 can be used instead. It is therefore not necessary to exchange the whole bearing housing 1, in contrast to conventional wind turbines, where a change of a bearing setup is not possible. Advantageously by way of the invention the corresponding secondary bearing setup 6, 8 or one of the corresponding bearing setups can be used to give the wind turbine 2 a "second life".

Of course it is also possible to have more than a first bearing group 3 and a second bearing group 4. Each bearing group 3, 4 can also comprise more than the primary bearing setups 5, 7 and the secondary bearing setups 6, 8, so that even a third or more bearing setups can be provided.

Figure 3 shows a wind turbine 2 with a bearing housing 1. The wind turbine 2 further comprises a rotor 11 connected to the bearing housing 1. The rotor shaft (not shown) of the rotor 11 is rotatably arranged by the first bearing group 3 and the second bearing group 4 or in the situation shown in figure 3 is rotatably arranged by the primary bearing setups 5, 7 respectively. As can further be seen from figure 1 and 3, the bearing housing 1 comprises a generator mounting flange 12, by which a generator (not shown) can be connected with the bearing housing 1.

## Claims

1. Wind turbine (2), comprising a rotor (11) with a rotor shaft connected to a generator and a bearing housing (1), whereby the bearing housing (1) comprises at least a first bearing group (3) and a second bearing group (4) each comprising at least a primary bearing setup (5, 6) and a secondary bearing setup (7, 8) in which bearing means are receivable, **characterized in that** the rotor shaft is rotatably arranged by the primary bearing setups (5, 6) or the secondary bearing setups (7, 8), whereby in case of a failure or damage that occurs to one of the primary bearing setups, the wind turbine is stopped and the secondary bearing setups is used to pivot the rotor shaft.

2. Wind turbine according to claim 1, **characterized in that** the first bearing group (3) and the second bearing group (4) are arranged on axially spaced locations.

3. Wind turbine according to claim 1 or 2, **characterized in that** the primary bearing setup (5, 6) and the secondary bearing setup (7, 8) of the first bearing group (3) and/or the primary bearing setup (5, 6) and the secondary bearing setup (7, 8) of the second bearing group (4) are axially abutting each other.

4. Wind turbine according to one of the preceding claims, **characterized in that** the bearing setups (5 - 8) comprise at least one circumferentially arranged notch (9) in which at least one bearing means is receivable or received.

5. Wind turbine according to claim 4, **characterized in that** the notch (9) is fluid proof.

6. Wind turbine according to one of the preceding claims, **characterized in that** the bearing means are fluid bearings and/or bearing elements, in particular sliding bearings, wherein each bearing element comprises at least one exchangeable bearing pad (10).

7. Method for operating a wind turbine (2) as specified in one of the claims 1 to 6, **characterized in that** the wind turbine (2) is operated with the bearing means being mounted or received in the primary bearing setups (5, 6) or the secondary bearing setups (7, 8), whereby the bearing setups (5 - 8) in operation are changed, if at least one bearing setup related component is damaged or needs maintenance.

8. Method according to claim 7, comprising the following steps:
- If at least one primary bearing setup (5, 6) is damaged or needs maintenance the secondary bearing setups (7, 8) are used to pivot the rotor shaft until the at least one primary bearing setup (5, 6) is repaired or maintained,
- If the at least one primary bearing setup (5, 6) is irreparably broken the secondary bearing setups (7, 8) are kept in operation.

9. Method according to claim 7 or 8, **characterized in that** the bearing means of the primary bearing setups (5, 6) are used in the secondary bearing setups (7, 8), if the primary bearing setups (5, 6) are not operational.

## Patentansprüche

1. Windenergieanlage (2), die einen Rotor (11) mit einer mit einem Generator verbundenen Rotorwelle und ein Lagergehäuse (1) umfasst, wobei das Lagergehäuse (1) zumindest eine erste Lagergruppe (3) und eine zweite Lagergruppe (4) umfasst, die jeweils zumindest eine Primärlagereinrichtung (5, 6) und eine Sekundärlagereinrichtung (7, 8) umfassen, in denen Lagermittel aufgenommen werden können, **dadurch gekennzeichnet, dass** die Rotorwelle über die Primärlagereinrichtung (5, 6) oder die Sekundärlagereinrichtung (7, 8) drehbar angeordnet ist, wobei die Windenergieanlage, wenn es bei einer der Primärlagereinrichtungen zu einem Ausfall oder einer Beschädigung kommt, angehalten wird und die Sekundärlagereinrichtungen zum drehbaren Lagern der Rotorwelle verwendet werden.

2. Windenergieanlage nach Anspruch 1, **dadurch gekennzeichnet, dass** die erste Lagergruppe (3) und die zweite Lagergruppe (4) an axial beabstandeten Stellen angeordnet sind.

3. Windenergieanlage nach Anspruch 1 oder 2, **dadurch gekennzeichnet, dass** die Primärlagereinrichtung (5, 6) und die Sekundärlagereinrichtung (7, 8) der ersten Lagergruppe (3) und/oder die Primärlagereinrichtung (5, 6) und die Sekundärlagereinrichtung (7, 8) der zweiten Lagergruppe (4) axial aneinander anliegen.

4. Windenergieanlage nach einem der vorhergehenden Ansprüche, **dadurch gekennzeichnet, dass** die Lagereinrichtungen (5 bis 8) mindestens eine in Umfangsrichtung angeordnete Aussparung (9) umfassen, in der mindestens ein Lagermittel aufgenommen werden kann oder ist.

5. Windenergieanlage nach Anspruch 4, **dadurch gekennzeichnet, dass** die Aussparung (9) fluiddicht ist.

6. Windenergieanlage nach einem der vorhergehenden Ansprüche, **dadurch gekennzeichnet, dass** es sich bei den Lagermitteln um Fluidlager und/oder Fluidlagerelemente, insbesondere Gleitlager, handelt, wobei jedes Lagerelement mindestens ein austauschbares Lagersegment (10) umfasst.

7. Verfahren zum Betreiben einer Windenergieanlage (2) nach einem der Ansprüche 1 bis 6, **dadurch gekennzeichnet, dass** die Windenergieanlage (2) mit in den Primärlagereinrichtungen (5, 6) oder den Sekundärlagereinrichtungen (7, 8) montierten oder aufgenommenen Lagermitteln betrieben wird, wobei die in Betrieb befindlichen Lagereinrichtungen (5 bis 8) ausgetauscht werden, wenn mindestens eine zur Lagereinrichtung gehörende Komponente beschädigt ist oder gewartet werden muss.

8. Verfahren nach Anspruch 7, das folgende Schritte umfasst:
- wenn mindestens eine Primärlagereinrichtung (5, 6) beschädigt ist oder gewartet werden muss, werden die Sekundärlagereinrichtungen (7, 8) zum drehbaren Lagern der Rotorwelle benutzt, bis die mindestens eine Primärlagereinrichtung (5, 6) repariert oder gewartet worden ist,
- wenn die mindestens eine Primärlagereinrichtung (5, 6) nicht reparierbar ist, bleiben die Sekundärlagereinrichtungen (7, 8) in Betrieb.

9. Verfahren nach Anspruch 7 oder 8, **dadurch gekennzeichnet, dass** die Lagermittel der Primärlagereinrichtungen (5, 6) in den Sekundärlagereinrichtungen (7, 8) benutzt werden, wenn die Primärlagereinrichtungen (5, 6) nicht einsatzfähig sind.

## Revendications

1. Éolienne (2), comprenant un rotor (11) avec un arbre de rotor connecté à un générateur et un boîtier de palier (1), dans laquelle le boîtier de palier (1) comprend au moins un premier groupe de paliers (3) et un second groupe de paliers (4) comprenant chacun au moins un mécanisme de palier primaire (5, 6) et un mécanisme de palier secondaire (7, 8) dans lesquels des moyens de palier peuvent être logés,
**caractérisée en ce que** l'arbre de rotor est fixé de façon à pouvoir tourner par les mécanismes de palier primaire (5, 6) ou les mécanismes de palier secondaire (7, 8), dans laquelle, en cas de défaillance ou de dommage qui se produit sur un des mécanismes de palier primaire, l'éolienne est stoppée et les mécanismes de palier secondaire sont utilisés pour faire pivoter l'arbre de rotor.

2. Éolienne selon la revendication 1, **caractérisée en ce que** le premier groupe de paliers (3) et le second groupe de paliers (4) sont agencés sur des emplacements espacés axialement.

3. Éolienne selon la revendication 1 ou 2, **caractérisée en ce que** le mécanisme de palier primaire (5, 6) et le mécanisme de palier secondaire (7, 8) du premier groupe de paliers (3) et/ou le mécanisme de palier primaire (5, 6) et le mécanisme de palier secondaire (7, 8) du second groupe de paliers (4) viennent en butée axialement l'un contre l'autre.

4. Éolienne selon l'une des revendications précédentes, **caractérisée en ce que** les mécanismes de palier (5 - 8) comprennent au moins une rainure agencée circonférentiellement (9) dans laquelle au moins un moyen de palier peut être reçu ou est reçu.

5. Éolienne selon la revendication 4, **caractérisée en ce que** la rainure (9) est étanche aux fluides.

6. Éolienne selon l'une des revendications précédentes, **caractérisée en ce que** les moyens de palier sont des paliers fluides et/ou des éléments de palier, en particulier des paliers lisses, dans laquelle chaque élément de palier comprend au moins un patin d'appui (10) échangeable.

7. Procédé de fonctionnement d'une éolienne (2) selon l'une des revendications 1 à 6, **caractérisé en ce que** l'éolienne (2) fonctionne lorsque les moyens de palier sont montés ou reçus dans les mécanismes de palier primaire (5, 6) ou les mécanismes de palier secondaire (7, 8), et dans lequel les mécanismes de palier (5 - 8) sont changés en service si au moins une composante associée à un mécanisme de palier est endommagée ou a besoin d'un entretien.

8. Procédé selon la revendication 7, comprenant les étapes suivantes :
- si au moins un mécanisme de palier primaire (5, 6) est endommagé ou a besoin d'un entretien, les mécanismes de palier secondaire (7, 8) sont utilisés pour faire pivoter l'arbre de rotor jusqu'à ce que le au moins un mécanisme de palier primaire (5, 6) soit réparé ou entretenu,
- si le au moins un mécanisme de palier primaire (5, 6) est endommagé de façon irréparable, les mécanismes de palier secondaire (7, 8) sont maintenus en fonctionnement.

9. Procédé selon la revendication 7 ou 8, **caractérisé en ce que** les moyens de palier des mécanismes de palier primaire (5, 6) sont utilisés dans les mécanismes de palier secondaire (7, 8) si les mécanismes de palier primaire (5, 6) ne sont pas fonctionnels.
